# EUROPEAN PATENT APPLICATION

(11) **EP 4 365 544 A1**
(43) Date of publication of application: **08.05.2024**
(21) Application number: 23208378.2
(22) Date of filing: 07.11.2023
(51) Int. Cl.: G01B 11/25

(54) **SURFACE INSPECTION SYSTEM AND METHOD**

(30) Priority: 07.11.2022 PT 2022118317
(71) Applicant: Sentinelconcept - Unipessoal Lda, 4830-512 Póvoa de Lanhoso (PT)
(72) Inventor: FARIA DE OLIVEIRA, ÁLVARO CÉSAR, 4815-022 CONDE (PT); SILVA ALVES, JOEL NUNO, 4820-122 FAFE (PT); OLIVEIRA MOREIRA, RUI PATRÍCIO, 4805-276 PONTE (PT)
(74) Representative: Patentree

(57) **Abstract**

A surface inspection system and method are described, in particular a system for inspecting the surfaces of products injected into a mould, comprising a manipulator robot with an articulated arm for removing the injected products from said mould, at least two three-dimensional structured light scanning cameras, and at least one line laser for illuminating said surfaces, which together perform the three-dimensional scanning, for inspecting said surfaces in an inspection area; wherein the robot is configured to remove the injected products along a predetermined direction of movement for inspection, and wherein the two cameras are arranged along a line that is transverse to said predetermined direction of movement for inspection.

## Description

### TECHNICAL FIELD

The present description relates to a system and its method of surfaces inspection.

### BACKGROUND

The current state of the art includes numerous image detection systems applied specifically to product inspection, for example, on an assembly line. This detection is usually carried out by a single camera placed in a privileged position to capture the product being analysed. This analysis is carried out through specular reflection, i.e., through a mirror reflection of the emitted wave against the product's surface being analysed, in which the incoming direction is reflected in a single outgoing direction.

Document CN210514095 U presents a three-dimensional visual image detection device comprising a six-axis robot, an injection moulding machine, a conveyor belt, an electric sliding table and a three-dimensional visual camera. A sliding block is arranged on the bottom surface of the electric sliding table, the bottom surface of the sliding block is connected with a mounting strip, and a LED lamp is arranged in the mounting area. According to the document, three-dimensional visual camera shooting detection can be performed by controlling the white-light LED, the blue-light LED, and the red-light LED in the external light source. Compared to the technical solution now being presented, the system does not need any image recognition using RGB technology, as this approach does not allow high accuracies to be achieved, i.e., with an accuracy level of less than 1 mm, when scanning injection-moulded parts, as it is impossible to scan correctly on diffuse surfaces. In addition to these differences, the system now presented does not require any specific belt for placing the parts being analysed.

Document GB2358467 presents a visual inspection system for inspecting industrial parts, such as plastic moulded caps that can reliably detect defects at very high inspection rates in the order of 1600 per minute. The system includes an inclined inspection ramp that provides separation between the caps that are processed through an inspection station to provide an accurate image of each individual cap without interference from adjacent caps and a rejection mechanism to remove selected caps from the stream of caps. In addition, said inspection station includes a light source and a camera, the light source provided on the back side of the cap in the form of an infrared LED strobe light that provides lighting for appropriate imaging of caps of any colour to detect and identify defects. Compared to the technical solution now presented, the system does not require any specific belt for placing the parts to be analysed and it can take advantage of the movement of the robot, removing the products from the moulding cavity for better positioning of the part to be inspected. Another difference is that the system described in this document does not work with three-dimensional images, so it is not possible to detect defects in terms of height, as it is now possible with the system presented.

These facts are described to illustrate the technical problem solved by the embodiments of the present document.

### GENERAL DESCRIPTION

The present description relates to a system and its method of surfaces inspection.

In some sectors of industry, especially in the plastic, composite or metallurgical injection industry, it is common to use a robot to remove the injected product from inside the mould. This robot typically moves in at least three axes, there being coupled an end-of-arm tool, for example, a hand gripper, pneumatic grippers, pneumatic fingers, gripper systems or gripping devices to manipulate parts, at least one suction cup, with capacity of rotation around at least one axis. This end-of-arm tool is responsible for ensuring a good grip on the part to be inspected, thus guaranteeing a stable movement during its scanning.

Several inspection devices known from the prior art, including those indicated above, perform the inspection only when the injected product is placed on a belt. This solution is used in particular in systems where the product is removed from the mould by the action of gravity. This solution can also be applied to injection moulding machines that use a robot to remove the parts, but the added cost of the belt makes the investment in the robot less attractive. Another problem with belt inspection is that only the face directly exposed to the camera can be monitored, not being possible to position the part and/or camera in a position that favours the inspection.

The surface inspection system now disclosed comprises a robot for removing injected products from a mould using an end-of-arm tool, at least two cameras with a single line laser for surface analysis installed in an area adjacent to said mould, wherein said robot is configured to place the part horizontally followed by a lateral movement for removing the part from the mould, passing through said surface analysis cameras.

Inspecting the movement of the robot as performed by the system now presented also allows the system to decide on the placement of the product in the appropriate container, classifying it as a conforming or non-conforming product without the need for any additional elements, such as mechanical rejectors for example. Thus, the robot of the system now presented can be configured to place the analysed part in at least one container for placing parts classified as having defects or not.

Prior art solutions still do not provide a complete and detailed view of the part when it has protuberances or recesses that create obliterated areas that the camera cannot detect, known as occlusion areas (8), creating a significant reduction in the quality of scanning parts using specular reflection (10).

The inspection system now presented also allows the robot to stop in different horizontal positions, improving the image acquired, and even rotate the entire part using the end-of-arm tool in order to inspect the other face of the part.

The inspection system further comprises at least two cameras (1) and at least one line laser (2) to proceed with 3D scanning of the part. The use of the laser (2) ensures that the surface reading is obtained way more robustly and does not vary with parameters as diverse as ambient lighting or the shade of the piece.

The inspection system now presented also makes it possible to obtain images with much greater definition and resolution when compared to the state of the art since it uses at least two cameras (1) together with at least one laser (2) for surface analysis, which allow to implement noise filtering techniques.

Throughout this description, an end-of-arm tool is considered to be a fundamental feature of robotic technology. It is a piece of equipment that connects to parts and components external to the robotic arm and is usually present at the end of said robotic arm - for example, the welding torch in a robotic welding system. As the name suggests, it is a connection tool used at the end of a robotic arm.

This technical solution also enables a defect detection in the order of 157 µm in the X and Y directions and also 89 µm in the Z direction. When compared to the defect detection existing in the state of the art, the results presented by the technique herein described are clearly superior.

The present text describes a system for inspecting the surfaces of products injected into a mould, comprising a manipulator robot with an articulated arm for removing the injected products from said mould, at least two three-dimensional structured light scanning cameras, and at least one line laser for illuminating said surfaces, which together perform the three-dimensional scanning, for inspecting said surfaces in an inspection area; wherein the robot is configured to remove the injected products along a predetermined direction of movement for inspection, and wherein the two cameras are arranged along a line that is transverse to said predetermined direction of movement for inspection.

In an embodiment, the surface inspection system comprises two-line lasers for structured light to illuminate said surfaces.

In an embodiment, the surface inspection system robot is configured to previously carry out a movement of removal of the injected products from inside the mould, followed by a movement along said predetermined direction of movement for inspection.

In an embodiment, the robot of the surface inspection system is configured to previously carry out a movement of removal of the injected products from inside the mould, followed by a vertical upward movement of the injected products after removal of the injected products from inside the mould, followed by a horizontal movement of the injected products, followed by a vertical downward movement along said predetermined direction of movement for inspection.

In an embodiment, the robot of the surface inspection system is configured to previously carry out a movement of removal of the injected products from inside the mould, followed by a vertical upward movement along said predetermined direction of movement for inspection.

In an embodiment, the at least two scanning cameras and/or the at least one line laser of the surface inspection system are mounted on a pan-tilt type platform.

In an embodiment, the minimum distance between two subsequent scanning cameras of the surface inspection system is comprised between 100 mm and 200 mm, preferably between 120 mm and 180 mm, even more preferably between 140 mm and 160 mm.

In an embodiment, the surface inspection system comprises an electronic data processor configured so that the reading of the cameras can be performed independently of each other.

In an embodiment, the surface inspection system comprises an electronic data processor configured so that the reading of each of the surfaces is performed through the comparison of a point cloud read on the surface with a reference point cloud.

In an embodiment, the articulated arm of the surface inspection system comprises an end-of-arm tool comprising a pneumatic gripper, a pneumatic finger, a gripper system, or a gripping device for manipulating parts with rotation in at least one axis.

In an embodiment, the articulated arm of the surface inspection system comprises an end-of-arm tool comprising at least one or more suction cups.

In an embodiment, the surface inspection system further comprises at least one container for placing defective and/or non-defective parts.

In an embodiment, the at least two cameras of the surface inspection system are configured to generate a distancing or approximation effect relative to said surfaces by varying the focal length of the camera.

The present text further describes an injection machine comprising the surface inspection system.

The present text further describes a computer-implemented method for inspecting surfaces using the aforementioned system or machine, comprising the steps of acquiring an image or images of said surfaces; creating a point cloud from the acquired image or images; placing the point cloud created in the previous step in a same reference position as a reference point cloud; projecting the point cloud obtained in the previous step onto the reference point cloud; processing the projected cloud to obtain contours; comparing between the contours obtained and the reference contours.

In an embodiment, the comparison of contours carried out by the method comprises the steps of segmenting the area to be analysed using minimum and maximum height limits, locating the contour position using a previously recorded contour and/or checking for flaws in the contour.

In an embodiment, the image or images acquired in the method is a two-and-a-half dimensional image, 2.5D.

In an embodiment, said contours calculated in the method comprise points and wherein in order to compare the contours obtained with the reference contours the method comprises checking each point of the reference contour against the nearest point of the contour of a surface to be inspected.

### BRIEF DESCRIPTION OF THE DRAWINGS

For ease of understanding, figures are herein attached, which represent preferred embodiments that are not intended to limit the object of this description.
**Figure 1****:** Schematic representation of a surface inspection system that uses one camera (a) and with two cameras (b) on a flat surface, as presented in the present description.
**Figure 2****:** Schematic representation of a surface inspection system that uses one camera (a) and with two cameras (b) on a specular surface, as presented in the present description.
**Figure** 3: Schematic representation of a surface inspection system of the prior art with a fixed camera (a) and with a camera attached in a Pan-Tilt module (b), where it is possible to check the occurrence or non-occurrence of occlusion zones in the scanning of a laser camera as described.
**Figure 4****:** Flowchart representation of image acquisition and analysis by the surface inspection system.
**Figure 5****:** Schematic representation of the integration of the surface inspection system with the injection machine.

Throughout the aforementioned figures, the following elements are indicated with their respective references:
- 1 -: camera;
- 2 -: laser;
- 3 -: inspection area;
- 4 -: computer;
- 5 -: end-of-arm tool;
- 6 -: container of non-defective parts;
- 7 -: container of defective parts;
- 8 -: occlusion zone;
- 9 -: pan-tilt system;
- 10 -: specular reflection.

### DETAILED DESCRIPTION

The present disclosure relates to a system and its method of inspecting surfaces.

Taking the production of polymers as an example, generally are used moulds that comprise two main parts with an opening that sometimes forms a line of symmetry. When the mould is closed, the polymer mixture is injected, which, after some cooling time, is semi-cured, allowing the mould to open and leaving the injected polymer piece available to be handled.

In an embodiment, after opening the mould, the robot of the surface inspection system descends to the height of the part to be inspected, then makes a slight horizontal approach movement so that the clamping components, located on the end-of-arm tool (5), come into contact with the part, and these components then act to grip the part. Once the part has been released from the mould, the robot performs the movements of distancing and subsequent climbing configured for being performed in order to move away from all the components of the mould and the injection machine to avoid collisions. Immediately after this movement, the robot places the part horizontally and starts the lateral movement to remove the part from the mould area. During this lateral movement and as soon as the part enters the inspection area (3) of the surface inspection device, the system that controls the injection moulding machine informs the inspection system to start acquiring images of the part and proceed to inspect it. The robot of the surface inspection system, from a robotics point of view, could be any robot already used in the state of the art, properly configured.

In an embodiment, as soon as the part is inspected, the injection moulding machine is informed of the result, for example, through different possible protocols, such as OPC Unified Architecture, Modbus TCP, Ethernet/IP, or others suitable for this purpose, and the part is placed in the conforming or non-conforming product zone depending on that analysis. In another embodiment, the injection machine communicates with the robot.

In an embodiment, for larger parts or multiple parts in a larger area, the lateral movement made by the robotic arm can be combined with horizontal movements in order to inspect all the parts.

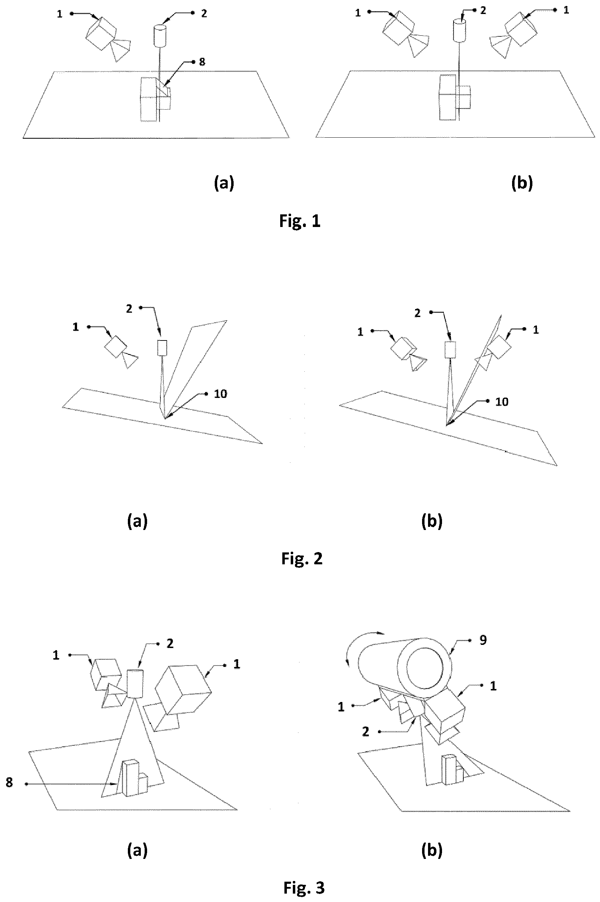

In an embodiment, the surface inspection system further comprises the existence of at least two cameras (1) and respective laser (2) for surface analysis mounted in an area adjacent to the mould. As can be seen in Figure 1 (b), the use of at least two cameras (1) for surface analysis allows for a correct reading of the surface of the part, especially when it has protuberances or recesses that create obliterated areas that a single camera cannot detect, as illustrated in Figure 1 (a).

In addition to this advantage, the use of at least two surface analysis cameras (1) improves the scanning quality in the case of specular surfaces since the surface analysis line must be detected again on camera (1), i.e., the reflection must necessarily go in the direction of the camera (1). When only one camera (1) is used, this probability is significantly reduced for specular surfaces, as illustrated in Figure 2.

In a further embodiment, the surface inspection system can make use of a camera system (1) and/or the at least one respective line laser (2) mounted on a pan-tilt system (9), as illustrated in Figure 3, so that the control system can place the camera (1) and/or the line laser (2) in their best possible orientation, not only to guarantee a correct analysis of the surface, avoiding analysis errors caused by protuberances or recesses that lead to the creation of occlusion zones (8) but also to ensure that the reflection of the signal sent to the surface of the part goes in the direction of the camera (1) in order to obtain a correct reception by the detector.

Throughout this application, it is considered that a camera (1) and/or the line laser (2) mounted on a pan-tilt system (9) is a scanning system that combines two functionalities - pan and tilt - i.e. the same camera (1) and its line laser (2) with rotational movement in two axes.

In a further embodiment, the camera (1) used in the system comprises a distancing or approximation effect obtained by varying the focal length of the camera (1), whether this distancing is produced physically or digitally.

In an embodiment, the minimum distance between two subsequent cameras (1) used in the system is comprised between 100 mm and 200 mm, preferably between 120 mm and 180 mm, even more preferably between 140 mm and 160 mm. In some embodiments, the reading of the cameras (1) can be performed independently of each other.

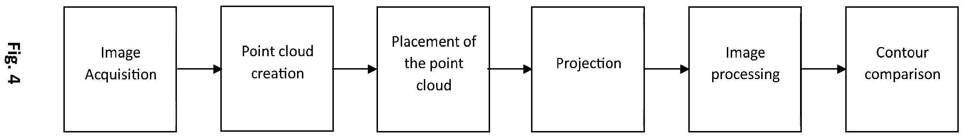

As illustrated in Figure 4, the inspection of the part produced is carried out through image acquisition by the surface analysis cameras (1), which first acquire an image, for example, a 2.5D image, duly calibrated. The system then creates a point cloud using this image and places this point cloud in the same position as the reference cloud. The point cloud is then compared with the reference point cloud by projecting the point cloud onto a 2.5D image with the ideal orientation for inspection, and filters are applied to improve image quality. Finally, the analysis function compares the reference contours with the part under analysis, and whenever a deviation above a predetermined value is detected, the system detects and classifies the existence of a non-conformity in the part.

In an embodiment, the cloud of reference points is created by reading what is considered to be a perfect part and/or by introducing the reference contour into the surface inspection system before the inspection.

In order to detect any deformity in the part, the analysis function preferably comprises the steps of segmenting the area to be analysed using minimum and maximum height limits; locating the contour position using a previously recorded contour and checking for a flaw in the contour.

In an embodiment of the step of segmenting the area to be analysed using minimum and maximum height limits, the operator defines the minimum and maximum limits for segmenting the image in the software of the surface inspection system. In practice, everything outside this limit is removed.

In an embodiment of the step of locating the contour position using a previously recorded contour, the software of the surface inspection system runs an image overlay using a contour location algorithm that inspects by placing the figures in the same position. In an embodiment this algorithm only works in 2.5D and compensates for the translation and rotation of the figures. This solves problems related to mechanical backlash in the end-of-arm tool (5) and robot.

In an embodiment of the step of checking for flaws in the contour, each point on the reference contour is checked against the nearest point on the contour to be inspected if the distance is greater than a predetermined value configurable by the user. In this situation, the contour zone is considered defective.

To detect the contours, the part is first segmented, which in practice ensures that there is material up to a certain height of the part.

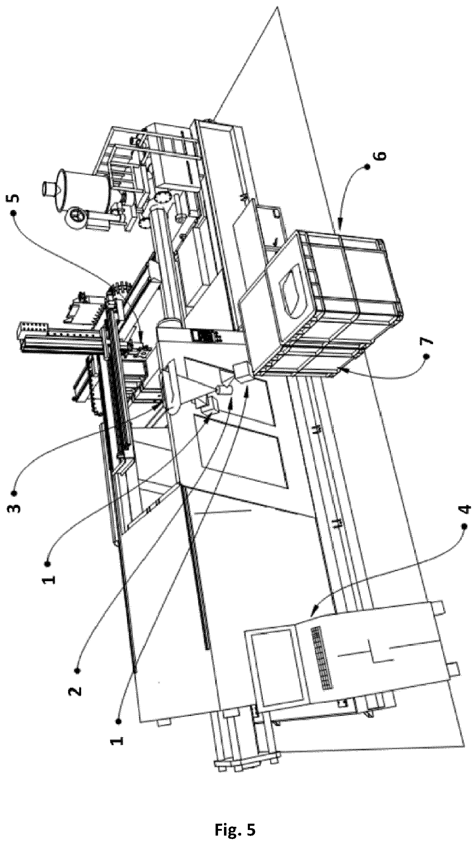

In an embodiment and as shown in Figure 5, the surface inspection system can be integrated with an injection moulding machine, placing said inspection system in an area adjacent to the moulding area so that the robot handling the part to be inspected, using the end-of-arm tool (5), can pass the part through the inspection area (3) in a quick and practical way. In the inspection area (3), the inspection cameras (1) and the corresponding reading laser (2) will analyse the part so that the software system of the computer (4) using, for example, the method described above, can decide whether to place the part in the non-defective parts container (6) or in the defective parts container (7).

In an embodiment, and as illustrated in Figure 3, it is possible to check the occurrence or non-occurrence of shadows in the scanning of a laser camera as described.

The term "comprises" or "comprising" when used herein is intended to indicate the presence of the features, elements, integers, steps and components mentioned but does not preclude the presence or addition of one or more other features, elements, integers, steps and components, or groups thereof.

The present invention is, of course, in no way restricted to the embodiments described in this document, and a person with average knowledge in the art may foresee many possibilities for modifying it and replacing technical characteristics with equivalent ones, depending on the requirements of each situation, as defined in the appended claims.

The following claims define further embodiments of the present description.

## Claims

1. Surface inspection system of products injected into a mould, comprising a manipulator robot with an articulated arm for removing the injected products from said mould, at least two three-dimensional structured light scanning cameras, and at least one line laser for illuminating said surfaces, which together perform the three-dimensional scanning, for inspecting said surfaces in an inspection area;
wherein the robot is configured to remove the injected products along a predetermined direction of movement for inspection, and
wherein the two cameras are arranged along a line that is transverse to said predetermined direction of movement for inspection;
wherein the robot is configured to previously carry out a movement of removal of the injected products from inside the mould, followed by a movement along said predetermined direction of movement for inspection.

2. Surface inspection system according to the previous claim, comprising two line lasers for structured light to illuminate said surfaces, in particular a line laser for structured light to illuminate said surfaces for each of the two scanning cameras.

3. Surface inspection system according to claim 1 or 2, wherein the robot is configured to previously carry out a movement of removal of the injected products from inside the mould, followed by a vertical upward movement of the injected products after removal of the injected products from inside the mould, followed by a horizontal movement of the injected products, followed by a vertical downward movement along said predetermined direction of movement for inspection.

4. Surface inspection system according to any one of the claims, wherein the robot is configured to previously carry out a movement of removal of the injected products from inside the mould, followed by a vertical upward movement along said predetermined direction of movement for inspection.

5. Surface inspection system according to any one of the preceding claims, wherein the at least two scanning cameras and/or the at least one line laser are mounted on a pan-tilt type platform.

6. Surface inspection system according to any one of the preceding claims, wherein the minimum distance between two subsequent scanning cameras is comprised between 100 mm and 200 mm, preferably between 120 mm and 180 mm, even more preferably between 140 mm and 160 mm.

7. Surface inspection system according to any of the preceding claims, comprising an electronic data processor configured so that the reading of the cameras can be performed independently of each other.

8. Surface inspection system according to any of the preceding claims, comprising an electronic data processor configured so that the reading of each of the surfaces is performed through the comparison of a point cloud read on the surface with a reference point cloud.

9. Surface inspection system according to any one of the preceding claims, wherein the articulated arm comprises an end-of-arm tool that comprises a pneumatic gripper, a pneumatic finger, a gripper system, or a gripping device for manipulating parts with rotation in at least one axis.

10. Surface inspection system according to any one of the preceding claims, wherein the articulated arm comprises an end-of-arm tool comprising at least one or more suction cups.

11. Injection machine comprising the surface inspection system of any of the preceding claims.

12. Computer-implemented method for inspecting surfaces using the system or machine of any one of claims 1 to 10, comprising the following steps:
acquiring an image or images of said surfaces;
creating a point cloud from the acquired image or images;
placing the point cloud created in the previous step in a same reference position as a reference point cloud;
projecting the point cloud obtained in the previous step onto the reference point cloud; processing the projected cloud to obtain contours;
comparing the contours obtained with reference contours.

13. Method according to the previous claim, wherein the comparison of contours comprises the steps of segmenting the zone to be analysed using minimum and maximum height limits, locating the contour position using a previously recorded contour and/or checking for flaws in the contour.

14. Method according to claim 12 or 13, wherein the acquired image or images is a two-and-a-half dimensional image, 2.5D.

15. Method according to any one of claims 12 to 13, wherein said contours comprise points and wherein in order to compare the obtained contours with the reference contours the method comprises checking each point of the reference contour against the nearest point of the contour of a surface to be inspected.
